# EUROPÄISCHE PATENTANMELDUNG

(11) **EP 4 729 353 A1**
(43) Veröffentlichungstag der Anmeldung: **22.04.2026**
(21) Anmeldenummer: 25195569.6
(22) Anmeldetag: 13.08.2025
(51) Int. Cl.: B60N 2/06, B60N 2/07, B60N 2/14, B60N 2/18

(54) **DREHVORRICHTUNG**

(30) Priorität: 21.10.2024 DE 102024130593
(71) Anmelder: Aguti Produktentwicklung & Design GmbH, 88085 Langenargen (DE)
(72) Erfinder: Rogg, Christian, 88142 Wasserburg (DE); Jelinewski, Philipp, 88138 Weißensberg (DE)
(74) Vertreter: RavensPAT Patentanwälte Partnerschaft mbB

(57) **Zusammenfassung**

Drehvorrichtung für einen Fahrzeugsitz, wobei die Drehvorrichtung eine Montageplatte aufweist, um die Drehvorrichtung an einem Fahrzeug zu befestigen, wobei die Drehvorrichtung einen Drehteller aufweist, wobei die Drehvorrichtung eine Dreheinheit aufweist, wobei der Drehteller durch die Dreheinheit relativ zur Montageplatte drehbar gelagert ist, wobei am Drehteller eine Gelenkeinheit angeordnet ist, wobei an der Gelenkeinheit eine Verschiebeeinheit angeordnet ist, wobei an der Verschiebeeinheit der Fahrzeugsitz befestigbar ist, wobei die Verschiebeeinheit mittels der Gelenkeinheit relativ zum Drehteller um eine Schwenkachse der Gelenkeinheit schwenkbar vorhanden ist.

## Beschreibung

### Stand der Technik

Eine Drehvorrichtung für einen Fahrzeugsitz ist in vielfältigen Ausführungsformen bereits bekannt.

In Reisemobilen werden zum Beispiel Fahrzeugsitze eingesetzt, die sich mittels einer Drehvorrichtung drehen lassen, um den Fahrzeugsitz bei Stillstand des Fahrzeugs in einer anderen Position nutzen zu können. Z.B. mittels einer Drehung aus einer Fahrposition mit Sitzrichtung in Fahrtrichtung in eine Stillstandsposition mit Sitzrichtung außer Fahrtrichtung.

Abhängig vom Fahrzeug können hierbei verschiedene Elemente des Fahrzeugs oder weitere Fahrzeug-Einbauten eine Bewegung des Fahrzeugsitzes mittels der Drehvorrichtung behindern. Insbesondere steht beispielsweise ein Handbremshebel einer Handbremse regelmäßig einer derartigen Drehbewegung eines Fahrzeugsitzes hindernd entgegen.

### Aufgabe und Vorteile der Erfindung

Aufgabe der vorliegenden Erfindung ist es, eine alternative oder verbesserte Drehvorrichtung bereitzustellen, sodass ein Fahrzeugsitz insbesondere unabhängig von einer Fahrzeugausgestaltung eines Fahrzeugs, in welchem der Fahrzeugsitz angeordnet ist, aus einer Fahrposition in eine Stillstandsposition bewegbar ist und umgekehrt.

Die Aufgabe wird durch die Merkmale des Anspruchs 1 gelöst.

In den abhängigen Ansprüchen sind vorteilhafte und zweckmäßige Ausführungsformen der Erfindung angegeben

Die Erfindung geht von einer Drehvorrichtung für einen Fahrzeugsitz aus. Die wesentlichen Aspekte der Erfindung sind nun darin zu sehen, dass die Drehvorrichtung eine Montageplatte aufweist, um die Drehvorrichtung an einem Fahrzeug zu befestigen, wobei die Drehvorrichtung einen Drehteller aufweist, wobei die Drehvorrichtung eine Dreheinheit aufweist, wobei der Drehteller durch die Dreheinheit relativ zur Montageplatte drehbar gelagert ist, wobei am Drehteller eine Gelenkeinheit angeordnet ist, wobei an der Gelenkeinheit eine Verschiebeeinheit angeordnet ist, wobei an der Verschiebeeinheit der Fahrzeugsitz befestigbar ist, wobei die Verschiebeeinheit mittels der Gelenkeinheit relativ zum Drehteller um eine Schwenkachse der Gelenkeinheit schwenkbar vorhanden ist. Hierdurch ist ein vergleichsweise größerer Bewegungsspielraum für einen an der Drehvorrichtung angeordneten Fahrzeugsitz realisiert, um den Fahrzeugsitz im angeordneten Zustand am Fahrzeug von einer Fahrposition in eine Stillstandsposition bewegen zu können.

Beispielsweise ist die Montageplatte auf bekannte Befestigungsstrukturen im Fahrzeug angepasst vorhanden, sodass die Montageplatte insbesondere vergleichsweise flexibel in verschiedene Fahrzeuge flexibel einbaubar ist. Denkbar ist weiter, dass die Dreheinheit Lagerelemente, z.B. Kugel-, Wälz- oder Gleitlager aufweist, um den Drehteller relativ zur Montageplatte um die Drehachse drehen zu können.

Vorstellbar ist weiter, dass der Drehteller als eine Platte oder eine Scheibe ausgebildet ist. Beispielsweise ist der Drehteller plattenförmig oder tellerförmig ausgebildet. Denkbar ist jedoch auch, dass der Drehteller in Form eines Rahmens ausgebildet ist. Beispielsweise weist der Drehteller eine Ausnehmung auf.

Beispielsweise weist die Verschiebeeinheit Befestigungsmittel, z.B. in Form von Bohrlöchern, Verschraubungen oder Stiften auf, um den Fahrzeugsitz an der Verschiebeinheit zu montieren. Die Verschiebeeinheit ist beispielsweise linear verschieblich vorhanden. Denkbar ist, dass die Verschiebeeinheit Schienen aufweist. Vorstellbar ist weiterhin, dass jede Schiene ein Festschienenelement aufweist, welches an der Gelenkeinheit befestigt ist und ein Führungsschienenelement, welches in eine Verschieberichtung linearbeweglich am Festschienenelement gelagert ist. Denkbar ist, dass die Verschiebeeinheit genau zwei Schienen aufweist. Zum Beispiel sind die Befestigungsmittel am Führungsschienenelement ausgebildet.

Vorstellbar ist auch, dass das Festschienenelement oder die Festschienenelemente auf einer Festschienenplattform der Verschiebeeinheit befestigt sind. Denkbar ist, dass die Festschienenplattform als eine Platte oder plattenförmig ausgebildet ist. Denkbar ist weiter, dass das Führungsschienenelement oder die Führungsschienenelemente auf einer Führungsschienenplattform der Verschiebeeinheit befestigt sind. Denkbar ist, dass die Führungsschienenplattform als eine Platte oder plattenförmig ausgebildet ist. Hierdurch ist die Verschiebeinheit vergleichsweise kompakt aufgebaut und eine Montage vorteilhaft erleichtert. Beispielsweise sind die Schienen direkt mit der Gelenkeinheit verbunden oder mittels der Festschienenplattform. Zum Beispiel weist die Führungsschienenplattform Montageelemente zur Montage des Fahrzeugsitz an der Führungsschienenplattform auf. Denkbar ist, dass das Montagelement als eine Bohrung oder als ein Gewindestift oder als ein Bolzen ausgebildet ist.

Weiter wird vorgeschlagen, dass die Schwenkachse quer zu einer Drehachse der Dreheinheit ausgerichtet ist. Hierdurch ist eine Bewegung der Verschiebeeinheit in vertikaler Richtung realisierbar.

Beispielsweise ist die Drehachse der Dreheinheit im angeordneten Zustand im Fahrzeug quer zu einer Fahrtrichtung des Fahrzeugs vorhanden. Zum Beispiel ist die Schwenkachse der Gelenkeinheit im angeordneten Zustand im Fahrzeug, insbesondere in der Fahrposition, quer zu einer Fahrtrichtung des Fahrzeugs vorhanden. Denkbar ist, dass die Drehachse der Dreheinheit sich parallel zur Vertikalen oder in Richtung der Vertikalen erstreckt.

Vorstellbar ist weiter, dass die Gelenkeinheit ein Schwenkelement aufweist. Beispielsweise weist die Gelenkeinheit zwei Schwenkelemente auf. Vorstellbar ist, dass die Gelenkeinheit genau zwei Schwenkelemente aufweist. Denkbar ist, dass die zwei Schwenkelemente voneinander beabstandet an der Drehvorrichtung vorhanden sind. Beispielsweise weist ein Schwenkelement einen ersten und einen zweiten Schwenkhebel und ein Gelenk auf, wobei das Gelenk den ersten und den zweiten Schwenkhebel gelenkig verbindet. Bei mehr als einem Schwenkelement ist es weiter vorstellbar, dass die Schwenkachsen der Gelenke der Schwenkhebel aufeinander fallen und/oder mittels einer Drehwelle miteinander verbunden sind. Beispielsweise weist die Gelenkeinheit eine einzige Schwenkachse auf.

Vorstellbar ist weiter, dass der erste Schwenkhebel des Schwenkelements mit dem Drehteller verbunden ist und der zweite Schwenkhebel mit der Verschiebeeinheit, z.B. mit einem Festschienenelement oder mit der Festschienenplattform. Hierdurch ist die Verschiebeeinheit um die Schwenkachse des Gelenks der Gelenkeinheit oder um die Schwenkachse der Gelenkeinheit relativ zum Drehteller schwenkbar gelagert.

Ebenfalls wird vorgeschlagen, dass die Drehvorrichtung ein Verriegelungselement aufweist, mittels welchem die Verschiebeeinheit relativ zum Drehteller positionsfest festlegbar ist. Hierdurch ist eine Komfortfunktion bereitgestellt.

Beispielsweise ist das Verriegelungselement derart ausgebildet, dass die Verschiebeeinheit relativ zum Drehteller drehfest um die Schwenkachse der Gelenkeinheit festlegbar ist. Zum Beispiel verriegelt das Verriegelungselement die Verschiebeeinheit in einer Position relativ zum Drehteller um die Schwenkachse der Gelenkeinheit lösbar.

Beispielsweise weist das Verriegelungselement ein Fangelement auf. Beispielsweise ist das Fangelement an einem ersten Verriegelungsorgan des Verriegelungselements ausgebildet. Denkbar ist, dass das Verriegelungselement ein zweites Verriegelungsorgan aufweist, an welchem ein Mitnehmer angeordnet ist. Denkbar ist weiter, dass das Fangelement dazu ausgebildet ist, den Mitnehmer einzufangen und im verriegelten Zustand des Verriegelungselements und/oder in einer Verriegelungsstellung des Fangelements den Mitnehmer festzulegen. Vorstellbar ist weiterhin, dass das Verriegelungselement ein Blockierelement aufweist, um eine Bewegung des Fangelements in einer Entriegelungsstellung des Fangelements zu blockieren, sodass das Fangelement den Mitnehmer nicht einfangen und festlegen kann. Vorstellbar ist weiterhin, dass durch eine Bewegung des Blockierelements eine Bewegung des Fangelements aus einer Verriegelungsstellung des Fangelements in die Entriegelungsstellung freigebbar ist. Denkbar ist ebenfalls, dass durch eine Bewegung des Blockierelements, z.B. in die entgegengesetzte Richtung, das Fangelement aus der Entriegelungsstellung in die Verriegelungsstellung bewegbar ist.

Zum Beispiel ist das erste Verriegelungsorgan am Drehteller befestigt. Denkbar ist weiter, dass das zweite Verriegelungsorgan an der Verschiebeeinheit befestigt ist. Beispielsweise ist das zweite Verriegelungsorgan am Festschienenelement oder an der Festschienenplattform befestigt. Beispielsweise ist das Verriegelungselement beabstandet zur Gelenkeinheit an der Drehvorrichtung angeordnet. Denkbar ist, dass das Verriegelungselement in Verschieberichtung der Verschiebeeinheit von der Gelenkeinheit beabstandet vorhanden ist.

Zum Beispiel ist ein Verschiebebereich der Verschiebeeinheit abhängig von einer Drehposition des Drehtellers ausgebildet. Beispielsweise ist ein Sperrmechanismus vorhanden, durch welchen abhängig von einer Drehposition des Drehtellers ein Verschieben der Verschiebeeinheit verhindert ist. Beispielsweise sind mehrere Verschiebebereiche an der Verschiebeeinheit vorhanden, welche durch eine Drehposition des Drehtellers vorgebbar sind. Beispielsweise sind die Verschiebebereiche an der Festschienenplattform ausgebildet. Denkbar ist, dass ein Verschiebebereich als eine Ausnehmung an der Festschienenplattform vorhanden ist.

Auch wird vorgeschlagen, dass die Verschiebeeinheit eine Verschieberichtung bereitstellt, um einen an die Drehvorrichtung angeordneten Fahrzeugsitz zu verschieben, wobei die Schwenkachse der Gelenkeinheit quer zu der Verschieberichtung ausgebildet ist. Hierdurch ist vorteilhaft ein zusätzlicher Bewegungsfreiheitsgrad der Drehvorrichtung realisiert. Beispielsweise stellt die Verschiebeeinheit eine Verschieberichtung bereit, um einen an die Drehvorrichtung angeordneten Fahrzeugsitz relativ zur Montageplatte zu verschieben.

Beispielsweise ist die Schwenkachse der Gelenkeinheit horizontal ausgerichtet. Beispielsweise ist die Drehachse der Dreheinheit und/oder die Schwenkachse der Gelenkeinheit quer, z.B. senkrecht, zu der Verschieberichtung der Verschiebeeinheit angeordnet. Zum Beispiel erstreckt sich die Drehachse der Dreheinheit und/oder die Schwenkachse der Gelenkeinheit in eine Richtung quer, z.B. senkrecht, zu der Verschieberichtung der Verschiebeeinheit. Beispielsweise ist die Verschieberichtung der Verschiebeeinheit in der Fahrposition horizontal ausgerichtet vorhanden.

Ebenfalls wird vorgeschlagen, dass die Gelenkeinheit ein Federelement aufweist, wobei mittels einer Federkraft des Federelements die Verschiebeeinheit kraftbeaufschlagt vorhanden ist. Beispielsweise ist mittels des Federelements die Verschiebeeinheit relativ zur Dreheinheit und/oder der Montageplatte kraftbeaufschlagt vorhanden. Hierdurch ist eine Bewegung des Fahrzeugsitz um die Schwenkachse der Gelenkeinheit vergleichsweise einfach realisierbar.

Beispielsweise ist das Federelement als eine Spiralfeder, Druckfeder oder als eine Schenkelfeder ausgebildet. Denkbar ist, dass die Gelenkeinheit zwei Federelemente aufweist. Beispielsweise ist das Federelement an einem Schwenkelement ausgebildet. Z.B. ist das Federelement am Gelenk des Schwenkelements ausgebildet. Beispielsweise ist mittels des Federelements der erste Schwenkhebel zum zweiten Schenkhebel des Schwenkelements kraftbeaufschlagt vorhanden.

Auch wird vorgeschlagen, dass ein Zugband vorhanden ist, wobei das Zugband mit einem ersten Ende am Drehteller festgelegt ist, wobei das Zugband mit einem zweiten Ende an der Verschiebeeinheit festgelegt ist, sodass das Zugband eine Bewegung der Verschiebeeinheit relativ zum Drehteller begrenzt. Hierdurch ist vorteilhaft eine Schwenkbewegung der Verschiebeeinheit relativ zur Dreheinheit und/oder der Montageplatte durch die Federkraft des Federelements begrenzt.

Denkbar ist, dass das Zugband als eine Kette, als ein Gurt oder als ein Band, z.B. als Halteband, ausgebildet ist. Hierdurch ist es vergleichsweise kostengünstig ausgebildet. Zum Beispiel ist das Zugband mit dem ersten Ende am Drehteller oder an einem ersten Schwenkhebel befestigt und mit dem zweiten Ende des Zugbands an der Festschiene, der Festschienenplattform oder einem zweiten Schwenkhebel der Gelenkeinheit. Denkbar ist, dass das Zugband am ersten und am zweiten Ende mit einem der Elemente verschraubt oder vernietet vorhanden ist. Beispielsweise erstreckt sich das Zugband vom ersten Ende zum zweiten Ende entlang einer Längserstreckung. Beispielsweise sind das erste und das zweite Ende des Zugbands voneinander beabstandet vorhanden.

Beispielsweise begrenzt das Zugband eine Schwenkbewegung der Verschiebeeinheit ausgehend von einer ersten Position relativ zur Dreheinheit hin zu einer zweiten Position relativ zur Dreheinheit um die Schwenkachse der Gelenkeinheit. Vorstellbar ist, dass in der zweiten Position die Verschiebeeinheit durch das Federelement kraftbelastet vorhanden ist, sodass in der zweiten Position der Verschiebeeinheit das Zugband durch die Federkraft des Federelements kraftbeaufschlagt ist. Z.B. ist das Zugband in der zweiten Position der Verschiebeeinheit gestreckt vorhanden. Beispielsweise ist das Zugband derart an der Drehvorrichtung angeordnet, dass das Zugband der Federkraft des Federelements entgegenwirken kann.

Denkbar ist, dass die Verschiebeeinheit in der ersten Position mittels des Verriegelungselements relativ zum Drehteller verriegelbar ist. Beispielsweise ist die Verschiebeeinheit in der ersten Position durch die Federkraft des Federelements kraftbeaufschlagt vorhanden, wobei in der verriegelten Position der Verschiebeeinheit das Verriegelungselement der Federkraft des Federelements entgegenwirkt.

Beispielsweise begrenzt das Zugband eine Schwenkbewegung der Verschiebeeinheit um die Schwenkachse der Gelenkeinheit auf einen Schwenkbereich. Beispielsweise ist der Schwenkbereich um einen Winkelbereich zwischen 0° und 45° oder um einen Winkelbereich zwischen 0° und 30° oder um einen Winkelbereich zwischen 0° und 20° begrenzt. Beispielsweise ist ein Schwenkwinkel der Verschiebeeinheit in der verriegelten Position der Verschiebeeinheit 0°. Beispielsweise ist ein Schwenkwinkel im durch das Zugband begrenzten Zustand 20°, 30° oder 45°.

Auch wird vorgeschlagen, dass die Drehvorrichtung ein Entriegelungshebel aufweist, wobei durch eine Betätigung des Entriegelungshebels eine Drehbewegung des Drehtellers relativ zur Montageplatte freigebbar ist, wobei durch die Betätigung des Entriegelungshebels gleichzeitig eine Verriegelung der Verschiebeeinheit freigebbar ist. Hierdurch ist die Drehvorrichtung vergleichsweise einfach bedienbar. Denkbar ist jedoch auch, dass zwei Hebel vorhanden sind, wobei jeweils einer der beiden Hebel dazu ausgestaltet ist, die Drehbewegung des Drehtellers freizugeben und der andere der beiden Hebel dazu ausgestaltet ist, die Verriegelung der Verschiebeeinheit und damit die Bewegung der Verschiebeeinheit um die Drehachse der Gelenkeinheit freizugeben.

Beispielsweise ist der Entriegelungshebel mit dem Verriegelungselement verbunden. Denkbar ist, dass der Entriegelungshebel das Verriegelungselement aufweist. Vorstellbar ist, dass der Entriegelungshebel mit dem Blockierelement verbunden ist. Hierdurch ist eine Bedienung der Drehvorrichtung vereinfacht. Beispielsweise ist hierdurch ein Lösung der Verriegelung, und damit ein Schwenken um die Schwenkachse der Gelenkeinheit, sowie gleichzeitig ein Drehen der Verschiebeeinheit um die Drehachse der Dreheinheit realisierbar.

Denkbar ist auch, dass das Blockierelement am Drehteller ausgebildet ist. Z.B. ist das Blockierelement als eine Führungskontur vorhanden. Denkbar ist, dass die Führungskontur eine Bewegung des Entriegelungshebels begrenzt. Beispielsweise ist der Entriegelungshebel mit dem Fangelement gekoppelt. Hierdurch ist beispielsweise durch eine Bewegung des Entriegelungshebels die Verriegelungsstellung des Fangelements freigebbar. Vorstellbar ist jedoch auch, dass hierdurch eine Verriegelung des Fangelements durch die Kopplung mit dem Entriegelungshebel blockierbar ist, sodass das Fangelement den Mitnehmer nicht verriegeln kann.

Zum Beispiel ist ein Verschiebebereich der Verschiebeeinheit abhängig von einer Drehposition des Drehtellers definiert. Beispielsweise ist ein Sperrmechanismus vorhanden, durch welchen abhängig von einer Drehposition des Drehtellers eine Verschiebung der Verschiebeeinheit verhindert ist. Beispielsweise sind mehrere Verschiebebereiche an der Verschiebeeinheit vorhanden, welche durch eine Drehposition des Drehtellers vorgebbar sind. Beispielsweise ist der Entriegelungshebel Bestandteil des Sperrmechanismus. Beispielsweise kann der Entriegelungshebel in eine Führung der Verschiebeeinheit eingreifen, sodass eine Bewegung, z.B. eine lineare Bewegung, der Verschiebeeinheit blockiert ist.

Ebenfalls wird vorgeschlagen, dass die Drehvorrichtung derart ausgebildet ist, dass die Verschiebeeinheit ausschließlich in zwei verschiedenen Positionen relativ zum Drehteller mittels des Verriegelungselements verriegelbar ist. Beispielsweise ist die Verschiebeeinheit ausschließlich in drei oder vier verschiedenen Positionen relativ zum Drehteller mittels des Verriegelungselements verriegelbar. Hierdurch ist einem Bediener der Dreheinheit ein haptisches Feedback gegeben, dass die Drehvorrichtung, insbesondere ein an die Drehvorrichtung angeordneter Fahrzeugsitz, sich in einer definierte Drehposition des Drehtellers relativ zur Montageplatte befindet. Z.B. ist eine definierte Drehposition die Fahrposition oder die Stillstandsposition. Beispielsweise ist die Drehvorrichtung dazu ausgebildet, dass außerhalb der definierten Drehpositionen ein Verschieben der Verschiebeeinheit blockiert ist.

Beispielsweise ist der Drehteller derart ausgebildet, dass die Verschiebeeinheit ausschließlich in zwei verschiedenen Positionen relativ zum Drehteller mittels des Verriegelungselements verriegelbar ist. Beispielsweise ist der Drehteller derart ausgebildet, dass die Dreheinheit ausschließlich in zwei verschiedenen Positionen verriegelbar ist. Beispielsweise ist eine Drehung der Drehvorrichtung um die Drehachse der Dreheinheit mittels des Entriegelungshebels ver- und/oder entriegelbar. Beispielsweise ist die Dreheinheit derart ausgebildet, dass eine Drehung der Drehvorrichtung um die Drehachse der Dreheinheit ausschließlich in zwei verschiedenen Positionen verriegelbar ist.

Zum Beispiel ist durch eine Verbindung des Entriegelungshebels mit dem Verriegelungselement ein Blockieren des Fangelement durch das Blockierelement realisierbar. Hierdurch ist eine Verriegelung der Verschiebeeinheit relativ zum Drehteller nur in ausgewählten Bereichen realisierbar. Beispielsweise ist die Drehvorrichtung dazu ausgebildet, eine Verriegelung der Verschiebeeinheit durch das Verriegelungselement in der Fahrposition und in einer weiteren zur Fahrposition verdrehten Position zuzulassen.

Eine beispielhafte Ausgestaltung der Erfindung ist ein Fahrzeugsitz mit einer Drehvorrichtung nach einer der vorangegangen genannten Ausführungen, wobei der Fahrzeugsitz an der Verschiebeeinheit befestigt ist.

Der Fahrzeugsitz kann als ein Fahrer- oder Beifahrersitz vorhanden sein und ist insbesondere in einem vorderen Bereich des Fahrzeugs anordenbar. Denkbar ist auch, dass der Fahrzeugsitz in einem hinteren Bereich des Fahrzeugs anordenbar ist. Der Fahrzeugsitz ist beispielsweise als ein Einzelsitz ausgestaltet.

Eine weitere beispielhafte Ausgestaltung der Erfindung ist ein Fahrzeug mit einer Drehvorrichtung oder einem Fahrzeugsitz nach einer der vorangegangen genannten Ausführungen.

Ein Fahrzeug, in welchem der Fahrzeugsitz beispielsweise anordenbar ist, ist beispielsweise ein Automobil. Beispielsweise ist das Automobil als ein Transporter, als ein Wohnmobil, als ein Reisemobil und/oder als ein Caravan ausgebildet. Beispielsweise weist das Fahrzeug eine Handbremse und/oder eine Feststellbremse auf. Vorstellbar ist, dass die Handbremse und/oder die Feststellbremse als eine Seilzugbremse ausgebildet ist. Denkbar ist, dass die Handbremse und/der die Feststellbremse, insbesondere der Bedienhebel der Bremse, einer reinen Drehbewegung des Fahrzeugsitzes um die Drehachse der Drehvorrichtung entgegenstehen und diese blockieren. Vorstellbar ist weiter, dass mittels einer Schwenkbewegung des Fahrzeugsitzes um die Schwenkachse der Gelenkeinheit eine Drehbewegung des Fahrzeugsitzes um die Drehachse freigegeben ist und der Fahrzeugsitz an der Handbremse und/oder der Feststellbremse vorbeigeschwenkt werden kann.

Ebenfalls ist es vorstellbar, dass eine Rückenlehne des Fahrzeugsitz in der Fahrposition des Fahrzeugsitz in einer Weise entgegen der Fahrtrichtung eine Schrägstellung aufweist, sodass eine, z.B. reine, Drehung des Fahrzeugsitzes durch das Fahrzeug oder Einbauten des Fahrzeugs blockiert ist. Beispielsweise ist es möglich, dass die Rückenlehne an dem Fahrzeug, z.B. der B-Säule des Fahrzeugs, oder Einbauten des Fahrzeugs bei einer Drehung des Fahrzeugsitzes ansteht. Entsprechend wird vorgeschlagen, vor einer Drehung des Fahrzeugsitzes die Rückenlehne in Fahrtrichtung in Richtung Sitzfläche des Fahrzeugsitzes abzuklappen.

Außerdem wird ein Verfahren zum Bewegen des Fahrzeugsitz vorgeschlagen, wobei das Verfahren mit einem Fahrzeugsitz und einer Drehvorrichtung wie vorangegangen vorgeschlagen durchgeführt wird, wobei das Verfahren folgende Verfahrensschritte aufweist,
- Abklappen einer Rückenlehne des Fahrzeugsitz in Fahrtrichtung des Fahrzeugs
- Verschieben des Fahrzeugsitz mittels der Verschiebeeinheit in Fahrtrichtung des Fahrzeugs
- Lösen des Verriegelungselements
- Schwenken des Fahrzeugsitz zusammen mit der Verschiebeeinheit um die Schwenkachse der Gelenkeinheit
- Drehen des Drehtellers mit Verschiebeeinheit und Fahrzeugsitz relativ zur Montageplatte um die Drehachse der Dreheinheit
- Schwenken des Fahrzeugsitz mit Verschiebeeinheit um die Schwenkachse der Gelenkeinheit
- Verriegeln des Verriegelungselements
- Klappen der Rückenlehne des Fahrzeugsitz in Fahrtrichtung des Fahrzeugs
- Verschieben des Fahrzeugsitz mittels der Verschiebeeinheit in Fahrtrichtung des Fahrzeugs

Vorstellbar ist, dass das Verfahren in genau der vorgenannten Reihenfolge durchgeführt wird. Vorstellbar ist jedoch auch, dass die ersten beiden Verfahrensschritte (Verschieben und Abklappen) in umgekehrter Reihenfolge oder gleichzeitig erfolgen. Denkbar ist auch, dass einzelne Verfahrensschritte zeitgleich erfolgen oder in getauschter Reihenfolge durchgeführt werden.

### Figurenbeschreibung

Weitere Merkmale und Vorteile der Erfindung sind anhand schematisch gezeigter Ausführungsbeispiele näher erläutert.

Im Einzelnen zeigt:
- Figur 1: eine Seitenansicht auf eine Drehvorrichtung mit daran angeordnetem Fahrzeugsitz,
- Figur 2: eine perspektivische Ansicht von seitlich oben auf eine Drehvorrichtung in einer verriegelten Position der Gelenkeinheit,
- Figur 3: eine perspektivische Ansicht von seitlich oben auf die Drehvorrichtung gemäß Figur 2 in einer entriegelten Position der Gelenkeinheit,
- Figur 4: eine perspektivische Ansicht von seitlich oben auf die Drehvorrichtung gemäß Figur 2 in einer gedrehten und entriegelten Position der Gelenkeinheit,
- Figur 5: eine Draufsicht auf die Drehvorrichtung, wobei Teile der Drehvorrichtung transparent gehalten sind, in einer verriegelten Position des Verriegelungselements,
- Figur 6: eine Draufsicht auf die Drehvorrichtung, wobei Teile der Drehvorrichtung transparent gehalten sind, in einer entriegelten Position des Verriegelungselements,
- Figur 7: eine Draufsicht auf die Drehvorrichtung, wobei Teile der Drehvorrichtung transparent gehalten sind, in einer entriegelten Position des Verriegelungselements und in einer teilgedrehten Position einer Festschienenplattform,
- Figur 8: eine Draufsicht auf die Drehvorrichtung, wobei Teile der Drehvorrichtung transparent gehalten sind, in einer verriegelten Position des Verriegelungselements, wobei eine Festschienenplattform im Vergleich zurFigur 5 um 180° gedreht vorhanden ist,
- Figuren 9 bis 12: eine Seitenansicht auf eine Drehvorrichtung mit daran angeordnetem Fahrzeugsitz in einem Fahrzeug in unterschiedlichen Bewegungsposition.

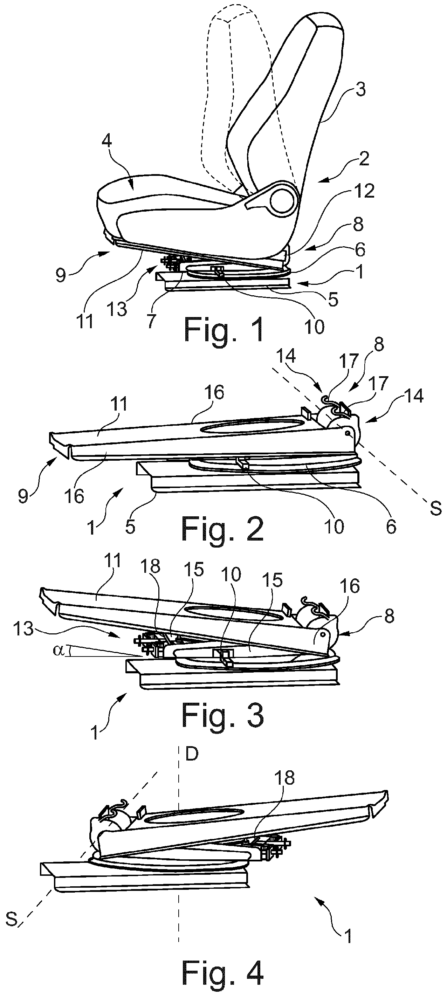

Figur 1 zeigt eine Drehvorrichtung 1 mit einem daran angeordneten Fahrzeugsitz 2, wobei eine Rückenlehne 3 des Fahrzeugsitzes 2 in einer Fahrposition gezeigt ist und in gestrichelter Darstellung in einer abgeklappten Position. In der abgeklappten Position der Rückenlehne 3 ist diese in Richtung einer Sitzfläche 4 des Fahrzeugs abgeklappt oder geschwenkt vorhanden (gestrichelte Darstellung in Figur 1).

Die Drehvorrichtung 1 weist eine Montageplatte 5, eine Dreheinheit 6, einen Drehteller 7, eine Gelenkeinheit 8, sowie eine Verschiebeeinheit 9 auf. Am Drehteller 7 ist ein Entriegelungshebel 10 schwenkbar angeordnet. In Figur 1 auch gezeigt ist ein Verriegelungselement 13, mittels welchem eine Festschienenplattform 11 der Verschiebeeinheit 9 am Drehteller 7 verriegelt werden kann. An der Festschienenplattform 11 ist eine Schiene 12 der Verschiebeeinheit 9 befestigt. In Figur 1 ist der Fahrzeugsitz 2 um eine Schwenkachse S der Gelenkeinheit 8 verschwenkt vorhanden.

In Figur 2 ist die Drehvorrichtung 1 gemäß Figur 1 dargestellt, wobei in Figur 2 nur die Festschienenplattform 11 der Verschiebeeinheit 9 dargestellt ist und die verbleibenden Elemente der Verschiebeeinheit 9 und der Fahrzeugsitz 2 nicht dargestellt sind. In Figur 2 ist die Drehvorrichtung in einer Fahrposition dargestellt, in welcher die Festschienenplattform 11 in einer durch das Verriegelungselement 13 verriegelten Position vorhanden ist.

In Figur 2 zu erkennen ist die Gelenkeinheit 8, welche zwei Schwenkelemente 14 aufweist. Beispielsweise weist jedes Schwenkelement 14 einen ersten Schwenkhebel 15 und einen zweiten Schwenkhebel 16 auf. Die erste Schwenkhebel 15 sind beispielsweise um eine Schwenkachse S der Gelenkeinheit 8 schwenkbar zu den zweiten Schwenkhebel 16 gelagert. Beispielsweise sind der erste und der zweite Schwenkhebel 15, 16 mittels einer Federkraft eines Federelements 17 der Gelenkeinheit 8 kraftbeaufschlagt vorhanden.

Denkbar ist, dass die ersten Schwenkhebel 15 mittels des Drehtellers 7 miteinander verbunden sind. Denkbar ist auch, dass die ersten Schwenkhebel 15 am Drehteller 7 befestigt sind oder integral am Drehteller 7 vorhanden sind. Vorstellbar ist auch, dass die zweiten Schwenkhebel 16 mittels der Festschienenplattform 11 miteinander verbunden sind. Beispielsweise sind die zweiten Schwenkhebel 16 an der Festschienenplattform 11 befestigt oder integral an der Festschienenplattform 11 vorhanden.

In Figur 3 ist die in Figur 2 gezeigte Drehvorrichtung 1 in einer entriegelten Position gezeigt. Durch eine Bewegung des Entriegelungshebels 10 kann das Verriegelungselement 13 betätigt werden, sodass die Verriegelung der Festschienenplattform 11 gelöst ist. Aufgrund der Kraftbeaufschlagung des zweiten Schwenkhebels 16 durch die Federkraft des Federelements 17 ist die Festschienenplattform 11 um einen Winkel α um die Schwenkachse S der Gelenkeinheit 8 verschwenkt vorhanden. Der Schwenkwinkel wird dabei von einem Zugband 18 begrenzt, welches der Federkraft des Federelements 17 entgegenwirkt. Beispielsweise ist das Zugband 18 mit einem ersten Ende am Drehteller 7 und mit einem zweiten Ende an der Festschienenplattform 11 befestigt.

Durch die Betätigung des Entriegelungshebels 10 kann nicht nur die Verriegelung des Verriegelungselements 13 gelöst werden. Es ist auch denkbar, dass dadurch, z.B. gleichzeitig eine Drehbewegung des Drehtellers 7 um eine Drehachse D der Dreheinheit 6 freigeben ist. Hierdurch ist der Drehteller 7 mit daran angeordneten Elementen um die Drehachse D drehbar. In Figur 4 ist entsprechend eine Position der Drehvorrichtung 1 gezeigt, in welcher der Drehteller 7 um die Drehachse D gedreht vorhanden ist. Die in Figur 4 gezeigte Position der Drehvorrichtung 1 entspricht im angeordneten Zustand am Fahrzeug beispielsweise einer Stillstandsposition.

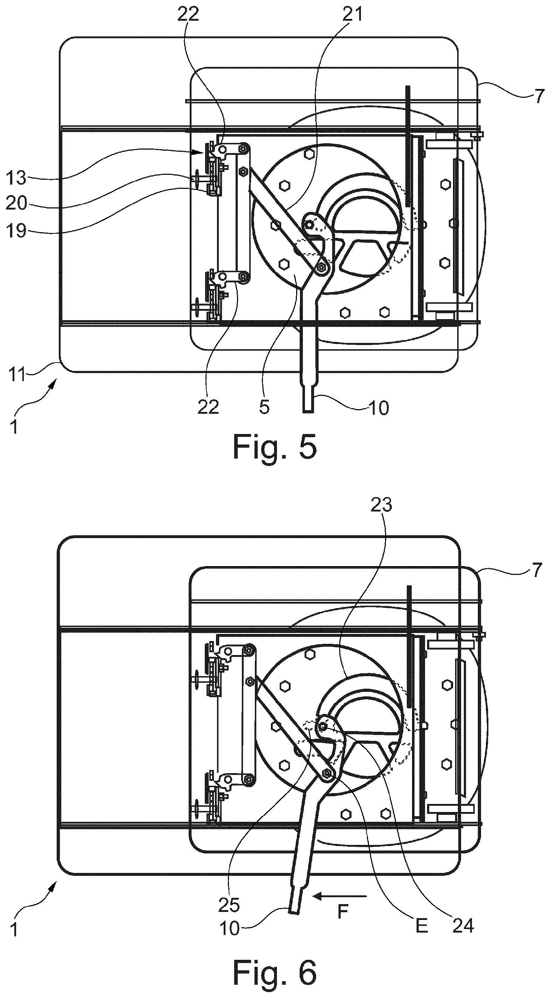

In den Figuren 5 und 6 ist die Drehvorrichtung 1 gemäß Figur 2 in einer Draufsicht gezeigt, wobei die Festschienenplattform 11 transparent dargestellt ist. In Figur 5 ist hierbei das Verriegelungselement 13 in einer verriegelten Position und in Figur 6 in einer entriegelten Position dargestellt.

Das Verriegelungselement 13 weist beispielsweise ein erstes Verriegelungsorgan in Form eines Fangelements 19 und einen Mitnehmer 20 auf. Der Mitnehmer 20 ist beispielsweise an der Festschienenplattform 11 befestigt. Das Fangelement 19 ist beispielsweise am Drehteller 7 montiert. Beispielsweise ist das Fangelement 19 als ein bewegliches Schnappelement vorhanden, welches den Mitnehmer 20 in der verriegelten Position hintergreift. Beispielsweise ist eine Bewegung des Fangelements 19 in der verriegelten Position blockiert.

Durch eine Bewegung in Fahrtrichtung F des Entriegelungshebels 10 ist eine Blockierung des Fangelements 19 freigegeben, sodass aufgrund der Federkraft des Federelements 17 der Mitnehmer 20 vom Fangelement 19 gelöst wird und die Festschienenplattform 11 um die Schwenkachse S der Gelenkeinheit 8 schwenkt. Hierzu ist der Entriegelungshebel 10 beispielsweise mittels einer Bewegungsmechanik 21 mit einem Blockierelement 22 verbunden. In der gelösten Position des Fangelements 19 ist eine Bewegung des Fangelements 19 freigegeben, sodass das Fangelement 19 den Mitnehmer 20 in dieser Position nicht verriegeln kann. Beispielsweise ist eine Verriegelung des Fangelements 19 erst durch ein Zurückbewegen des Blockierelements 22 realisierbar.

Aus den Figuren 5 und 6 geht eine Kontur 23 hervor. Beispielsweise ist die Kontur 23 an der Montageplatte 5 ausgebildet. An der Kontur 23 liegt ein Führungsstift 24 des Entriegelungshebels 10 an. Der Entriegelungshebel 10 ist beispielsweise um eine Entriegelungsachse E am Drehteller 7 beweglich gelagert. Beispielsweise weist die Kontur 23 eine erste Ausnehmung 25 auf, in welche der Führungsstift 24 eingreifen kann, sodass eine Drehbewegung des Drehtellers 7 relativ zur Montageplatte 5 blockiert ist. Ist der Führungsstift 24 beispielsweise aus der Ausnehmung 25 durch eine Drehbewegung des Entriegelungshebels 10 herausbewegt, ist eine Drehung des Drehtellers 7 um die Drehachse D der Dreheinheit 6 freigegeben.

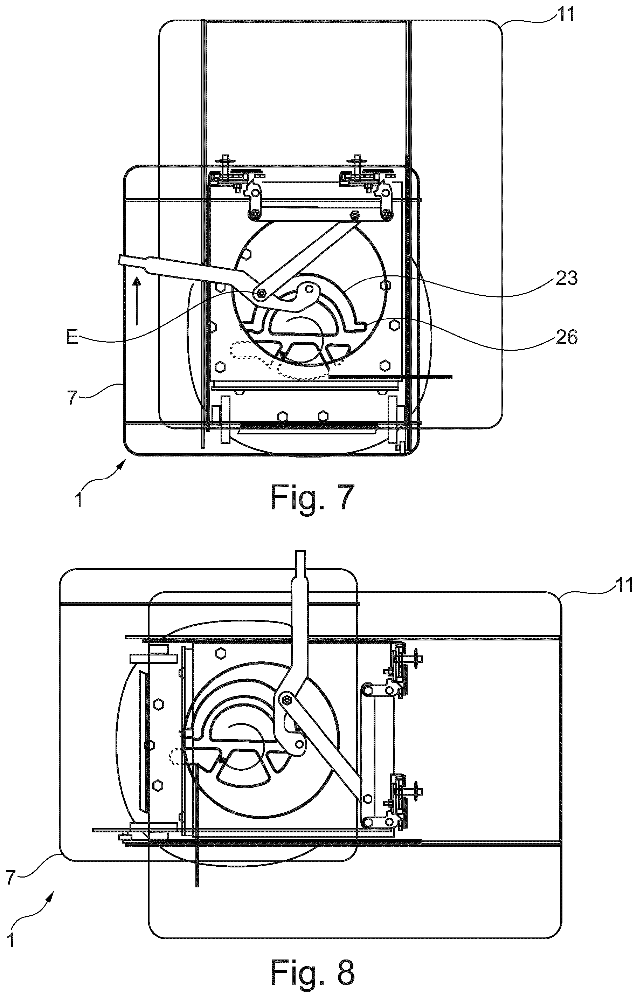

Wird der Drehteller 7 nun um die Drehachse D der Dreheinheit 6 bewegt, steht der Führungsstift 24 an der Kontur 23 an, sodass eine Drehbewegung des Entriegelungshebels 10 um die Entriegelungsachse E in Richtung Verriegelungselement 13 verhindert ist. Hierdurch ist eine Bewegung des Blockierelements 22 verhindert, womit das Fangelement 19 seine Verriegelungsstellung nicht einnehmen kann (Figur 7). In dieser Position ist damit eine Drehung des Drehtellers 7 bei gleichzeitig geschwenkter Position des Drehtellers um die Schwenkachse S realisiert.

Beispielsweise weist die Drehvorrichtung 1 eine weitere, z.B. zweite Ausnehmung 26 auf, in welche der Führungsstift 24 in einer gedrehten Position des Drehtellers 11, z.B. in einer um 180° gedrehten Position, eingreifen kann, wodurch das Fangelement 19 in eine Verriegelungsstellung zurückkehren kann (Figur 8). Hierdurch ist in der zweiten Position eine Verriegelung der Drehbewegung des Drehtellers um die Drehachse D, sowie eine Verriegelung einer Schwenkbewegung des Drehtellers 11 um die Schwenkachse S realisierbar.

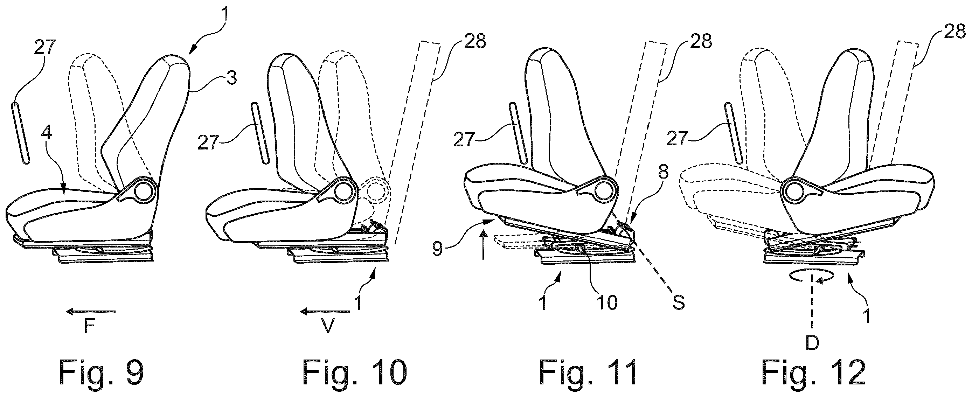

In den Figuren 9 bis 12 ist ein Bewegungsablauf des Fahrzeugsitz 2 dargestellt, welcher mittels der Drehvorrichtung 1 realisierbar ist. In den Figuren 9 bis 12 ist beispielhaft ein Lenkrad 27 eines Fahrzeugs (nicht gezeigt) positioniert, welches einer Drehbewegung des Fahrzeugsitz 2 als Hindernis entgegensteht.

Um dem Lenkrad 27 und anderen Komponenten im Fahrzeug auszuweichen, wird beispielsweise zunächst die Rückenlehne 3 des Fahrzeugsitzes 2 in Richtung Sitzfläche 4 des Fahrzeugsitz 2 um eine Schwenkachse des Fahrzeugsitzes 2 abgeklappt (Figur 9). Anschließend wird beispielsweise der Fahrzeugsitz 2 mittels der Verschiebeeinheit 8 in Fahrtrichtung F, in Richtung Lenkrad 27, relativ zur Montageplatte 5 der Drehvorrichtung 1 in eine Verschieberichtung V der Verschiebeeinheit 8 verschoben (Figur 10).

Darauf folgend wird beispielsweise eine Verriegelung des Verriegelungselements 13 durch eine Bewegung des Entriegelungshebels 10 gelöst, sodass die Verschiebeeinheit 9 und der daran angeordnete Fahrzeugsitz 2 um die Schwenkachse S der Gelenkeinheit 8 durch eine Federkraft eines Federelements 17 der Gelenkeinheit 8 nach oben verschwenkt wird (Figur 11).

Daran anschließend kann der Fahrzeugsitz 2 um die Drehachse D der Dreheinheit 6 an einer B-Säule 28 des Fahrzeugs (nicht gezeigt) vorbei gedreht werden. Beispielsweise ist es hierdurch möglich, den Fahrzeugsitz um 180° um die Drehachse D der Dreheinheit 6 im montierten Zustand im Fahrzeug zu drehen (Figur 12).

Nicht in den Figuren dargestellt kann anschließend die Rückenlehne wieder von der Sitzfläche weg, in Fahrtrichtung F, geklappt werden. Auch ist es anschließend vorstellbar, dass der Fahrzeugsitz 2 mittels der Verschiebeeinheit 9 relativ zur Montageplatte 5 in Fahrtrichtung F bzw. in Richtung Lenkrad 27 verschoben wird (nicht gezeigt).

### Bezugszeichenliste

- 1: Drehvorrichtung
- 2: Fahrzeugsitz
- 3: Rückenlehne
- 4: Sitzfläche
- 5: Montageplatte
- 6: Dreheinheit
- 7: Drehteller
- 8: Gelenkeinheit
- 9: Verschiebeeinheit
- 10: Entriegelungshebel
- 11: Festschienenplattform
- 12: Schiene
- 13: Verriegelungselement
- 14: Schwenkelement
- 15: Schwenkhebel
- 16: Schwenkhebel
- 17: Federelement
- 18: Zugband
- 19: Fangelement
- 20: Mitnehmer
- 21: Bewegungsmechanik
- 22: Blockierelement
- 23: Kontur
- 24: Führungsstift
- 25: Ausnehmung
- 26: Ausnehmung
- 27: Lenkrad
- 28: B-Säule

- S: Schwenkachse
- D: Drehachse
- V: Verschieberichtung
- E: Entriegelungsachse

## Patentansprüche

1. Drehvorrichtung (1) für einen Fahrzeugsitz (2), wobei die Drehvorrichtung (1) eine Montageplatte (5) aufweist, um die Drehvorrichtung (1) an einem Fahrzeug zu befestigen, wobei die Drehvorrichtung (1) einen Drehteller (7) aufweist, wobei die Drehvorrichtung (1) eine Dreheinheit (6) aufweist, wobei der Drehteller (7) durch die Dreheinheit (6) relativ zur Montageplatte (5) drehbar gelagert ist, wobei am Drehteller (7) eine Gelenkeinheit (8) angeordnet ist, wobei an der Gelenkeinheit (8) eine Verschiebeeinheit (9) angeordnet ist, wobei an der Verschiebeeinheit (9) der Fahrzeugsitz (2) befestigbar ist, wobei die Verschiebeeinheit (9) mittels der Gelenkeinheit (8) relativ zum Drehteller (7) um eine Schwenkachse (S) der Gelenkeinheit (8) schwenkbar vorhanden ist.

2. Drehvorrichtung (1) nach dem vorangegangenen Anspruch 1, **dadurch gekennzeichnet, dass** die Schwenkachse (S) der Gelenkeinheit (8) quer zu einer Drehachse (D) der Dreheinheit (6) ausgerichtet ist.

3. Drehvorrichtung (1) nach einem der vorangegangenen Ansprüche, **dadurch gekennzeichnet, dass** die Drehvorrichtung (1) ein Verriegelungselement (13) aufweist, mittels welchem die Verschiebeeinheit (9) relativ zum Drehteller (7) positionsfest festlegbar ist.

4. Drehvorrichtung (1) nach einem der vorangegangenen Ansprüche, **dadurch gekennzeichnet, dass** die Verschiebeeinheit (9) eine Verschieberichtung (V) bereitstellt, um einen an die Drehvorrichtung (1) angeordneten Fahrzeugsitz (2) zu verschieben, wobei die Schwenkachse (S) der Gelenkeinheit (8) quer zu der Verschieberichtung (V) ausgebildet ist.

5. Drehvorrichtung (1) nach einem der vorangegangenen Ansprüche, **dadurch gekennzeichnet, dass** die Gelenkeinheit (8) ein Federelement (17) aufweist, wobei mittels einer Federkraft des Federelements (17) die Verschiebeeinheit (9) kraftbeaufschlagt vorhanden ist.

6. Drehvorrichtung (1) nach einem der vorangegangenen Ansprüche, **dadurch gekennzeichnet, dass** ein Zugband (18) vorhanden ist, wobei das Zugband (18) mit einem ersten Ende am Drehteller( 7) festgelegt ist, wobei das Zugband (18) mit einem zweiten Ende an der Verschiebeeinheit (9) festgelegt ist, sodass das Zugband (18) eine Bewegung der Verschiebeeinheit (9) relativ zum Drehteller (7) begrenzt.

7. Drehvorrichtung (1) nach einem der vorangegangenen Ansprüche, **dadurch gekennzeichnet, dass** die Drehvorrichtung (1) ein Entriegelungshebel (10) aufweist, wobei durch eine Betätigung des Entriegelungshebels (10) eine Drehbewegung des Drehtellers (7) relativ zur Montageplatte (5) freigebbar ist, wobei durch die Betätigung des Entriegelungshebels (10) gleichzeitig eine Verriegelung der Verschiebeeinheit (9) freigebbar ist.

8. Drehvorrichtung (1) nach einem der vorangegangenen Ansprüche, **dadurch gekennzeichnet, dass** die Drehvorichtung (1) derart ausgebildet ist, dass die Verschiebeeineinheit (9) ausschließlich in zwei verschiedenen Positionen relativ zum Drehteller (7) mittels des Verriegelungselements (13) verriegelbar ist.

9. Fahrzeugsitz (2) mit einer Drehvorrichtung (1) nach einem der vorangegangenen Ansprüche, wobei der Fahrzeugsitz (2) an der Verschiebeeinheit (9) befestigt ist.

10. Fahrzeug mit einer Drehvorrichtung (1) oder einem Fahrzeugsitz (2) nach einem der vorangegangenen Ansprüche.

11. Verfahren zum Bewegen eines Fahrzeugsitz (2) mit einem Fahrzeugsitz (2) und einer Drehvorrichtung (1) nach Anspruch 9, wobei das Verfahren folgende Verfahrensschritte aufweist,
- Abklappen einer Rückenlehne (3) des Fahrzeugsitz (2) in Fahrtrichtung des Fahrzeugs
- Verschieben des Fahrzeugsitz (2) mittels der Verschiebeeinheit (9) in Fahrtrichtung des Fahrzeugs
- Lösen des Verriegelungselements (13)
- Schwenken des Fahrzeugsitz (2) mit Verschiebeeinheit (9) um die Schwenkachse (S) der Gelenkeinheit (8)
- Drehen des Drehtellers (7) mit Verschiebeeinheit (9) und Fahrzeugsitz (2) relativ zur Montageplatte (5) um die Drehachse (D) der Dreheinheit (6)
- Schwenken des Fahrzeugsitz (2) mit Verschiebeeinheit (9) um die Schwenkachse (S) der Gelenkeinheit (8)
- Verriegeln des Verriegelungselements (13)
- Klappen der Rückenlehne (3) des Fahrzeugsitz (2) in Fahrtrichtung des Fahrzeugs
- Verschieben des Fahrzeugsitz (2) mittels der Verschiebeeinheit (9) in Fahrtrichtung des Fahrzeugs
